# EUROPEAN PATENT APPLICATION

(11) **EP 2 512 010 A2**
(43) Date of publication of application: **17.10.2012**
(21) Application number: 12163209.5
(22) Date of filing: 04.04.2012
(51) Int. Cl.: H02K 9/18

(54) **Heat exchanger**

(30) Priority: 14.04.2011 US 201113087032
(71) Applicant: General Electric Company, Schenectady, NY 12345 (US)
(72) Inventor: Balista, Alex Banis, 13064-654 Sao Paulo (BR); Kawasaki, Nelson Yugi, 13064-654 Sao Paulo (BR); Lopes, Pedro Francis, 13064-654 Sao Paulo (BR); Yabiku, Renato Motohide, 13064-654 Sao Paulo (BR)
(74) Representative: Illingworth-Law, William Illingworth

(57) **Abstract**

A heat exchanger (30) is provided and includes a housing (40) disposed proximate to a heat source (20), the housing (40) having sidewalls (41) forming an enclosure, a baffle (43) defining in the enclosure a ventilation circuit (45) thermally communicative with the heat source (20), and central walls (44) defining a main channel (46) bisecting the ventilation circuit (45) along which cooling media flows and a tube (60) extending through a bisected portion of the ventilation circuit (45) and fluidly coupled to the main channel (46) and a housing exterior (460) to direct the cooling media from the main channel (46), through the bisected portion of the ventilation circuit (45) and to the housing exterior (460).

## Description

### BACKGROUND OF THE INVENTION

The subject matter disclosed herein relates to a heat exchanger and, more particularly, a heat exchanger for an electrical machine.

Heat exchangers typically employ tube bundles that are aligned with or orthogonal to an electrical machine shaft direction where there is a single entrance and a single outlet for cooling media. The tube bundles are generally separated into a first group and a second group. Each tube in the first group of tube bundles removes heat from heated airflow being directed away from the electrical machine. The cooled air is then carried back to the electrical machine and cooled again by the second group of tubes.

With this configuration, a pressure drop due to distributed friction loss or drag normally occurs along at least the first group of tubes. Also, a temperature difference between the heated air and the cooling media of the first group of tubes decreases along the tube lengths. As a result, a degree of cooling of the heated air is decreased given a volume of heated air and a volume of cooling media.

### BRIEF DESCRIPTION OF THE INVENTION

According to one aspect of the invention, a heat exchanger is provided and includes a housing disposed proximate to a heat source, the housing having sidewalls forming an enclosure, a baffle defining in the enclosure a ventilation circuit thermally communicative with the heat source, and central walls defining a main channel bisecting the ventilation circuit along which cooling media flows and a tube extending through a bisected portion of the ventilation circuit and fluidly coupled to the main channel and a housing exterior to direct the cooling media from the main channel, through the bisected portion of the ventilation circuit and to the housing exterior.

According to another aspect of the invention, a heat exchanger is provided and includes a housing disposed proximate to a heat source, the housing having sidewalls forming an enclosure, at least one baffle defining in the enclosure a ventilation circuit having at least one first section along which heated air flows away from the heat source and at least one second section along which cooled air flows toward the heat source, and central walls defining a main channel bisecting each of the at least one first and second sections of the ventilation circuit along which cooling media flows and a plurality of tubes respectively extending through bisected portions of the at least one first and second sections of the ventilation circuit, each of the plurality of tubes being fluidly coupled to the main channel and a housing exterior to direct the cooling media from the main channel through the bisected portions of the at least one first and second sections of the ventilation circuit and to the housing exterior.

According to yet another aspect of the invention, an apparatus is provided and includes an electrical machine, a heat exchanger having a housing disposed proximate to the electrical machine and having sidewalls forming an enclosure, at least one baffle defining in the enclosure a ventilation circuit having at least one first section along which heated air flows away from the electrical machine and at least one second section along which cooled air flows toward the electrical machine, and central walls defining a main channel bisecting each of the at least one first and second sections of the ventilation circuit along which cooling media flows and a plurality of tubes respectively extending through bisected portions of the at least one first and second sections of the ventilation circuit, each of the plurality of tubes being fluidly coupled to the main channel and a housing exterior to direct the cooling media from the main channel through the bisected portions of the at least one first and second sections of the ventilation circuit and to the housing exterior.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a side sectional view of an electrical machine;

FIG. 2 is an axial view of the electrical machine of FIG. 1; and

FIG. 3 is a perspective view of a heat exchanger of the electrical machine of FIGS. 1 and 2.

The detailed description explains embodiments of the invention, together with advantages and features, by way of example with reference to the drawings.

### DETAILED DESCRIPTION OF THE INVENTION

In accordance with aspects of the invention, two cooling circuits are provided in parallel with one another to reduce a length that cooling airflow travels. As a result, a pressure drop due distributed friction loss or drag is reduced and, as a length of a bundle is reduced, a more uniform temperature difference between cooling media and tube walls is available.

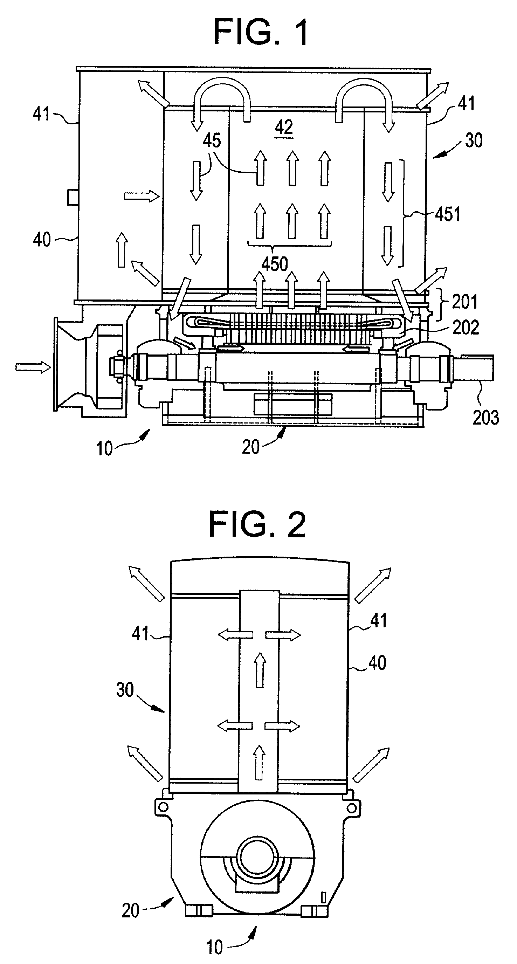

With reference to FIGS. 1-3, an apparatus 10 is provided. The apparatus 10 includes a heat source, such as an electrical machine 20 or some other similar machine and a heat exchanger 30. The heat exchanger 30 has a housing 40 disposed proximate to and in thermal communication with the electrical machine 20. The housing 40 includes sidewalls 41 that cooperatively form a volumetric enclosure 42 therein, at least one baffle 43 and central walls 44. The at least one baffle 43 is supported by the sidewalls 41 and defines in the enclosure 42 a ventilation circuit 45 having at least one first section 450 along which heated air flows away from the electrical machine 20 and a second section 451 along which cooled air flows toward the electrical machine 20. The central walls 44 are also supported by the sidewalls 41 and define a main channel 46. The main channel 46 bisects each of the at least one first and second sections 450, 451 of the ventilation circuit 45. Cooling media, such as air pumped by an external fan, flows along the main channel 46 and through ventilation circuit 45 as will be discussed below.

The heat exchanger 30 further includes a plurality of tubes 50 that respectively extend through bisected portions of the at least first and second sections 450, 451 of the ventilation circuit 45. Each of the plurality of tubes 50 is fluidly coupled to the main channel 46 and a housing exterior 460 and is thereby configured to direct the cooling media from the main channel 46 through the bisected portions of the at least one first and second sections 450, 451 of the ventilation circuit 45 and to the housing exterior 460.

As shown in FIGS. 1 and 2, the electrical machine 20 may include a ventilation system, components 202 and rotor 203 that generate heat with the rotor 203 being rotatable about an axis thereof. The ventilation system 201 pumps heated air away from the components 202 and into the first section 450 of the ventilation circuit 45 and drives cooled air from the second section 451 of the ventilation circuit 45 back toward the components 202. The main channel 46 may be disposed substantially in parallel with the rotor 203, with each of the plurality of tubes 50 being orthogonally oriented relative to the main channel 46 and the rotor 203.

The plurality of tubes 50 may include at least one first tube 60, at least one second tube 70, at least one third tube 80 and at least one fourth tube 90. The at least one first tube 60 extends through a first bisected portion 4501 of the at least one first section 450 of the ventilation circuit 45. The at least one second tube 70 extends through a second bisected portion 4502 of the at least one first section 450 of the ventilation circuit 45. The at least one third tube 80 extends through a first bisected portion 4511 of the at least one second section 451 of the ventilation circuit 45. The at least one fourth tube 90 extends through a second bisected portion 4512 of the at least one second section 451 of the ventilation circuit 45.

In accordance with aspects of the invention, the at least one first, second, third and fourth tubes 60, 70, 80, 90 are substantially similar in shape and size. However, it is to be understood that in alternative embodiments one or more may have a unique shape and size as compared to one or more of the others. Each of the at least one first, second, third and fourth tube 60, 70, 80, 90 may also have a substantially uniform geometry from end-to-end. However, it is again to be understood that in alternative embodiments one or more may have a varied geometry from end-to-end. Each of the at least one first, second, third and fourth tube 60, 70, 80, 90 may also include a tube bundle 100. This tube bundle 100 may be arranged in an in-line or staggered formation. Also, the at least one first tube 60 and the at least one second tube 70 may each extend in substantially opposite directions on either side of the main channel 46 and may be substantially coaxial and parallel. Similarly, the at least one third tube 80 and the at least one fourth tube 90 may each extend in substantially opposite directions on either side of the main channel 46 and may be substantially parallel and coaxial.

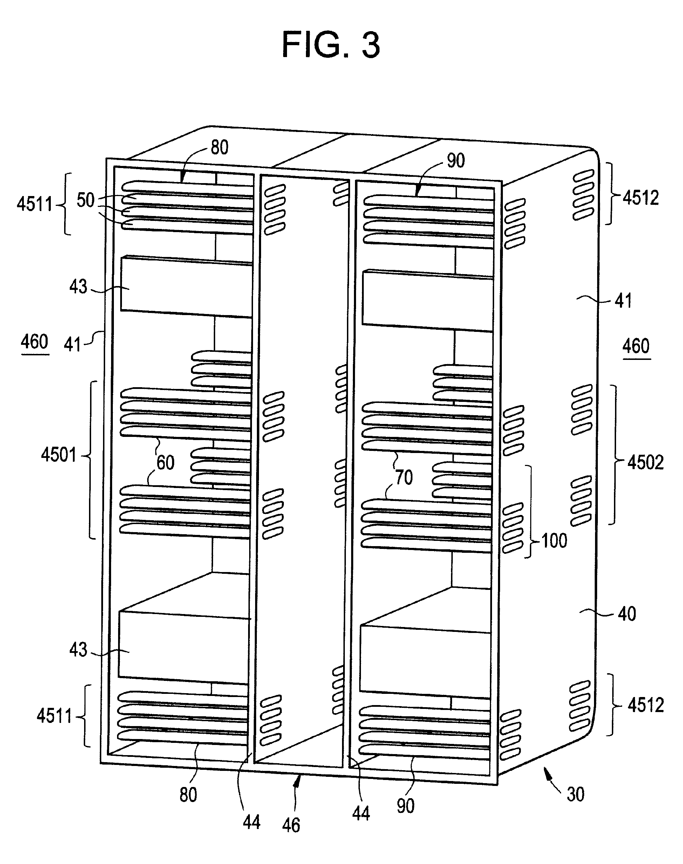

With the construction described above, the housing 40 is formed with the main channel 46 and bisected portions of the ventilation circuit 45 on either side of the main channel. In operation and as shown in the exemplary embodiment of the FIG. 3, heated air may flow away from the electrical machine 20 along the first and second bisected portions 4501, 4502 of the at least one first section 450 of the ventilation circuit 45 while cooling media flows from the main channel 46, into and through the at least one first and second tubes 60, 70. Heat is therefore removed from the heated air by the cooling media across the respective thermally conductive surfaces of the at least one first and second tubes 60, 70. The partially cooled air then flows around the at least one baffle 43 and back toward the electrical machine 20 along the first and second bisected portions 4511, 4512 of the at least one second section 451 of the ventilation circuit 45. The cooling media flows from the main channel 46, into and through the at least one third and fourth tubes 80, 90 whereby additional heat is removed from the partially cooled air by the cooling media across the respective thermally conductive surfaces of the at least one third and fourth tubes 80,90.

Since the cooling media travels through the ventilation circuit 45 by way of the at least one first, second, third and fourth tubes 60, 70, 80, 90, a distance the cooling media must travel from the main channel 46 to the housing exterior 460 is reduced as compared to a width of the heat exchanger 30. As such, a pressure drop along the lengths of the at least one first, second, third and fourth tubes 60, 70, 80, 90 is reduced or avoided and a temperature differential between the cooling media and the heated air along the lengths of the at least one first, second third and fourth tubes 60, 70, 80, 90 is maintained. That is, the at least one first, second third and fourth tubes 60, 70, 80, 90 may each have a length which is substantially equal to a length from the central walls 44 to the housing exterior 460. Since this length is substantially shorter than the width of the heat exchanger 30 and the ventilation circuit 45, a pressure and a temperature of the cooling media flowing through the at least one first, second third and fourth tubes 60, 70, 80, 90 each have less opportunity to decrease and increase, respectively.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A heat exchanger, comprising:
   a housing disposed proximate to a heat source, the housing having:
      sidewalls forming an enclosure,
      a baffle defining in the enclosure a ventilation circuit thermally communicative with the heat source, and
      central walls defining a main channel bisecting the ventilation circuit along which cooling media flows; and
      a tube extending through a bisected portion of the ventilation circuit and fluidly coupled to the main channel and a housing exterior to direct the cooling media from the main channel, through the bisected portion of the ventilation circuit and to the housing exterior.
2. The heat exchanger according to clause 1, wherein the tube is plural in number and comprises:
   at least one first tube extending through a first bisected portion of the ventilation circuit; and
   at least one second tube extending through a second bisected portion of the ventilation circuit.
3. The heat exchanger according to clause 1 or clause 2, wherein the at least one first and second tubes each extend in substantially opposite directions.
4. The heat exchanger according to any preceding clause, wherein the ventilation circuit comprises:
   at least one first section along which heated air flows away from the heat source; and
   at least one second section along which cooled air flows toward the heat source.
5. The heat exchanger according to any preceding clause, wherein the at least one first and second sections are each bisected by the main channel.
6. The heat exchanger according to any preceding clause, wherein the tube is plural in number and comprises:
   at least one first tube extending through a first bisected portion of the at least one first section of the ventilation circuit;
   at least one second tube extending through a second bisected portion of the at least one first section of the ventilation circuit;
   at least one third tube extending through a first bisected portion of the at least one second section of the ventilation circuit; and
   at least one fourth tube extending through a second bisected portion of the at least one second section of the ventilation circuit.
7. The heat exchanger according to any preceding clause, wherein the at least one first, second, third and fourth tubes are substantially similar.
8. The heat exchanger according to any preceding clause, wherein each of the at least one first, second, third and fourth tube has a substantially uniform geometry.
9. The heat exchanger according to any preceding clause, wherein each of the at least one first, second, third and fourth tube comprises a tube bundle.
10. The heat exchanger according to any preceding clause, wherein the at least one first tube and the at least one second tube each extend in substantially opposite directions and are substantially parallel, and
   wherein the at least one third tube and the at least one fourth tube each extend in substantially opposite directions and are substantially parallel.
11. A heat exchanger, comprising:
   a housing disposed proximate to a heat source, the housing having:
      sidewalls forming an enclosure,
      at least one baffle defining in the enclosure a ventilation circuit having at least one first section along which heated air flows away from the heat source and at least one second section along which cooled air flows toward the heat source, and
      central walls defining a main channel bisecting each of the at least one first and second sections of the ventilation circuit along which cooling media flows; and
      a plurality of tubes respectively extending through bisected portions of the at least one first and second sections of the ventilation circuit, each of the plurality of tubes being fluidly coupled to the main channel and a housing exterior to direct the cooling media from the main channel through the bisected portions of the at least one first and second sections of the ventilation circuit and to the housing exterior.
12. The heat exchanger according to any preceding clause, wherein each of the plurality of tubes is substantially similar to one another.
13. The heat exchanger according to any preceding clause, wherein each of the plurality of tubes has a substantially uniform geometry.
14. The heat exchanger according to any preceding clause, wherein each of the plurality of tubes respectively associated with the bisected portions of the at least one first and second sections of the ventilation circuit comprises a tube bundle.
15. An apparatus comprising:
   an electrical machine;
   a heat exchanger having a housing disposed proximate to the electrical machine and having:
      sidewalls forming an enclosure,
      at least one baffle defining in the enclosure a ventilation circuit having at least one first section along which heated air flows away from the electrical machine and at least one second section along which cooled air flows toward the electrical machine, and
      central walls defining a main channel bisecting each of the at least one first and second sections of the ventilation circuit along which cooling media flows; and
      a plurality of tubes respectively extending through bisected portions of the at least one first and second sections of the ventilation circuit, each of the plurality of tubes being fluidly coupled to the main channel and a housing exterior to direct the cooling media from the main channel through the bisected portions of the at least one first and second sections of the ventilation circuit and to the housing exterior.
16. The apparatus according to any preceding clause, wherein the electrical machine comprises a ventilation system to pump heated air into the ventilation circuit and to drive cooled air from the ventilation circuit.
17. The apparatus according to any preceding clause, wherein the main channel is substantially parallel with a rotor of the electrical machine, each of the plurality of tubes being orthogonal to the main channel and the rotor.
18. The heat exchanger according to any preceding clause, wherein each of the plurality of tubes is substantially similar to one another.
19. The heat exchanger according to any preceding clause, wherein each of the plurality of tubes has a substantially uniform geometry.
20. The heat exchanger according to any preceding clause, wherein each of the plurality of tubes respectively associated with the bisected portions of the first and second sections of the ventilation circuit comprises a tube bundle.

## Claims

1. A heat exchanger (30), comprising:
a housing (40) disposed proximate to a heat source (20), the housing (40) having:
sidewalls (41) forming an enclosure,
a baffle (43) defining in the enclosure a ventilation circuit (45) thermally communicative with the heat source (20), and
central walls (44) defining a main channel (46) bisecting the ventilation circuit (45) along which cooling media flows; and
a tube (60, 70, 80, 90) extending through a bisected portion of the ventilation circuit (45) and fluidly coupled to the main channel (46) and a housing exterior (460) to direct the cooling media from the main channel (46), through the bisected portion of the ventilation circuit (45) and to the housing exterior (460).

2. The heat exchanger (30) according to claim 1, wherein the tube (60, 70, 80, 90) is plural in number and comprises:
at least one first tube (60) extending through a first bisected portion of the ventilation circuit; and
at least one second tube (70) extending through a second bisected portion of the ventilation circuit.

3. The heat exchanger (30) according to claim 1 or claim 2, wherein the at least one first and second tubes (60, 70) each extend in substantially opposite directions.

4. The heat exchanger (30) according to any preceding claim, wherein the ventilation circuit (45) comprises:
at least one first section (450) along which heated air flows away from the heat source; and
at least one second section (451) along which cooled air flows toward the heat source.

5. The heat exchanger (30) according to any preceding claim, wherein the at least one first and second sections (450, 451) are each bisected by the main channel (46).

6. The heat exchanger (30) according to claim 5, wherein the tube (60, 70, 80, 90) is plural in number and comprises:
at least one first tube (60) extending through a first bisected portion (4501) of the at least one first section (450) of the ventilation circuit (45);
at least one second tube (70) extending through a second bisected portion (4502) of the at least one first section (450) of the ventilation circuit (45);
at least one third tube (80) extending through a first bisected portion (4511) of the at least one second section (451) of the ventilation circuit (45); and
at least one fourth tube (90) extending through a second bisected portion (4512) of the at least one second section (451) of the ventilation circuit (45).

7. The heat exchanger (30) according to claim 6, wherein the at least one first, second, third and fourth tubes (60, 70, 80, 90) are substantially similar.

8. The heat exchanger (30) according to claim 6 or claim 7, wherein each of the at least one first, second, third and fourth tube (60, 70, 80, 90) has a substantially uniform geometry.

9. The heat exchanger (30) according to any one of claims 6 to 8, wherein each of the at least one first, second, third and fourth (60, 70, 80, 90) tube comprises a tube bundle (100).

10. The heat exchanger (30) according to any one of claims 6 to 9, wherein the at least one first tube (60) and the at least one second tube (70) each extend in substantially opposite directions and are substantially parallel, and
wherein the at least one third tube (80) and the at least one fourth tube (90) each extend in substantially opposite directions and are substantially parallel.
